# DEMANDE DE BREVET EUROPEEN

(11) **EP 1 840 289 A1**
(43) Date de publication de la demande: **03.10.2007**
(21) Numéro de dépôt: 06380060.1
(22) Date de dépôt: 27.03.2006
(51) Int. Cl.: E04C 2/20, E04F 13/18

(54) **Panneau, treillis, blocs et tubes pour edification et urbanisme et mode de fabrication.**

(71) Demandeur: Natural Faber, S.L., 28224 Pozuelo de Alarcon (Madrid) (ES)
(72) Inventeur: Bermejo Sotillo, D. Miguel, 49003 Zamora (ES)
(74) Mandataire: Manzano Cantos, Gregorio

(57) **Abrégé**

Panneaux, treillis, blocs et tubes intégraux de structure interne désorganisé pour l'édification et l'urbanisme et mode de fabrication concernant un type de panneaux (4), treillis, blocs et tubes armés intégraux d'un seul corps compact constitué essentiellement d'une masse (2) de polyuréthane dans laquelle se trouve dispersées des fibres ou des filaments, de n'importe quelle matière et d'une peau (3) intégrale de polyuréthane pigmenté, tous conformés et intégrés dans un seul moule, très résistants à la déformation et à la détérioration environnementale, pour être employés dans l'édification et l'urbanisme appliqués, au moyen des accessoires et des éléments de fixation correspondant à des grilles, enclos, grillages, clôtures, balustrades, balcons, parapets, treillis, paravents, cloisons verticales, murs rideau, façades ventilées, parois, toitures, faux-plafonds, sols, canalisations, coffrages, pergolas, kiosques, maisons et maisonnettes préfabriquées et toute autre application possible dans la construction d'édifices et les travaux publics.

## Description

### Mémoire descriptif

L'invention concerne un type de panneaux, treillis, blocs et tubes, tous intégraux et structurés, d'un seul corps compact constitué essentiellement de trois éléments, une structure interne désorganisée à base de fibres ou de filaments, une masse de polyuréthane et une peau intégrale de polyuréthane, tous les éléments étant conformés et intégrés dans un seul moule, et se caractérisant par l'intégration inséparable de la peau ou protection superficielle avec la masse du corps, et à son tour, de celle-ci avec la structure, à laquelle elle adhère avec une ténacité très élevée, en étant très résistants à la déformation et à la détérioration environnementale, et particulièrement adéquats pour être employés dans l'édification et l'urbanisme appliqués au moyen des accessoires opportuns de fixation sur des grillages, enceintes, grilles, clôtures, balustrades, balcons, parapets, treillis, paravent, parois, cloisons verticales, murs rideau, façades ventilées, sols, canalisations, coffrages, toitures, faux-plafonds, pergolas, kiosques, maisons et maisonnettes préfabriquées et toute autre application possible dans la construction d'édifices et les travaux publics.

### Antécédents de l'invention:

Il existe actuellement des treillis , des grilles et des panneaux métalliques de tout type élaboré à partir de tôle, fils de fer, feuillards et des platines métalliques; il en existe également d'autres fabriqués à base de résine de polyester et d'autres composés à base de thermoplastiques. Il existe aussi des blocs, panneaux, treillis, et tubes préfabriqués à partir d'agglomérats de plâtre, ciment, fibre de cellulose, fibre de bois, fibre de polyester, dans toutes les combinaisons que permettent ces matériaux. Il y a aussi des panneaux, des treillis, des blocs et des tubes en béton armés fabriqués essentiellement avec du ciment et une grille interne métallique ou non. Il existe également des moulures et des éléments décoratifs en mousse de polyuréthane de basse densité dont la fonction primordiale est de servir de complément décoratif adhéré à un support étant donné qu'ils se caractérisent par le fait qu'ils n'ont pas de résistance structurale n'étant armés avec aucun élément structural. Il existe aussi des profilés en aluminium pour la charpenterie métallique qui se caractérisent en ce que le profilé en aluminium creux est recouvert extérieurement de polyuréthane obtenant ainsi une économie de matériaux qui entraîne logiquement un profilé creux et en ce qu'il manque de peau intégrale, et pour finir, il en existe aussi d'autres du type intégral à base de mousse de polyuréthane à structure rigide organisée de préférence métallique (Brevet N° 06380056.9 Du Même Titulaire Que Celui-Ci). Tous ceux-ci sont manifestement différents de l'objet de cette invention, tant par le procédé de fabrication que par les matériaux employés et les caractéristiques fonctionnelles et les techniques du produit fini, tous ceux-ci ayant en commun le fait qu'en aucun cas il ne s'agit de composés réunissant à la fois et dans un seul corps compact une structure désorganisée intérieure à base de fibres ou de filaments incluse dans le mélange de la masse de polyuréthane et de la peau intégrale de polyuréthane pigmenté, c'est à dire que les matériaux de la structure désorganisée, de la masse et de la peau sont fusionnés dans un amalgame indissociable. Actuellement, il n'y a pas de panneaux, treillis, blocs et tubes compacts de structure désorganisée à base de fibres ou de filaments, de masse de polyuréthane et de peau intégrale de polyuréthane sur toutes leurs surfaces, aussi bien dans les extérieures, les intérieures et les chants latéraux que dans les surfaces de l'intérieur des creux, appliqués sur des grilles, enceintes, balcons, balustrades, treillis, toitures, paravents, faux-plafonds, façades, sols, parois, cloisons verticales, canalisations et coffrages dans l'édification et l'urbanisme comme ceux proposés dans ce brevet d'invention.

### Activité inventive:

La qualité inventive se réfère, selon le procédé de fabrication de l'invention, au fait qu'au moyen de l'introduction d'un mélange liquide de polyuréthane composé essentiellement et de préférence de polyols et diisocyanate de diphénylméthane, mélangé à son tour avec une charge hétérogène de fibres ou de filaments à l'intérieur d'un moule revêtu intérieurement de polyurtéthane pigmenté de haute densité, une fois le procédé de réaction, de solidification et d'intégration terminé, on obtient une pièce compacte, armée, intégrale de composants inséparables de forme déterminée par le moule et de caractéristiques singulières et nouvelles quant à leur rigidité, ténacité, densité, dureté, texture, couleur superficielle et protection contre les intempéries et les agents agressifs, qui lui confèrent des qualités spécifiques et des performances inexistantes sur le marché jusqu'à maintenant, appliquées sur des treillis et des protections verticales, des cloisons verticales, des paravents, des toitures, des faux-plafonds, des sols, des canalisations, des coffrages, des parois, des maisons et maisonnettes préfabriquées et toute autre application dans l'édification et l'urbanisme.

### Description de l'invention:

Les panneaux, treillis, blocs et tubes compacts armés intégraux faisant l'objet de cette invention, présentent une masse de polyuréthane qui dans sa phase liquide a été mélangée avec des fibres ou des filaments et introduite à l'intérieur d'un moule revêtu intérieurement de polyuréthane pigmenté de haute densité, donnant lieu à un composé intégral compact très stable dont la forme est déterminée par le moule, de telle manière que l'objet obtenu est un corps solide de matériaux inséparables avec des propriétés mécaniques, chimiques et superficielles nouvelles et variées qui peuvent s'ajuster à différentes requêtes fonctionnelles et esthétiques grâce à la formulation des composants chimiques et la combinaison des caractéristiques des trois matériaux de base employés, le polyuréthane de masse pouvant adopter différentes propriétés selon l'emploi de différents isocyanates et diols et des proportions de mélanges, outre, l'incorporation intégrée de différentes charges synthétiques, minérales ou végétales et d'autres composants moussants, pigmentaires et ignifuges. La diversité de variantes en ce qui concerne les formes, propriétés mécaniques, couleurs, textures et applications est très large et il est impossible de les énumérer mais il faut comprendre que dans ce qui est fondamental toutes les variables dérivées de cette invention ont en commun l'objet de base de ce brevet qui est la combinaison intégrale dans un seul corps compact d'une structure interne désorganisée, d'une masse de polyuréthane moussé rigide composé essentiellement d'isocyanates et de diols et d'une peau ou d'un recouvrement de base polyuréthannée intégrée dans la masse, pour la formation de panneaux, treillis, blocs et tubes, pour leur application dans l'édification et l'urbanisme au moyen d'un nouveau procédé productif qui unit solidairement tous les composants au moyen d'un seul procédé d'intégration totale donnant lieu alors à un produit nouveau en ce qui concerne sa composition, ses propriétés et ses performances fonctionnelles.

Ci-dessous nous allons nous faire une idée plus large des caractéristiques de l'invention...

### Brève description des dessins:

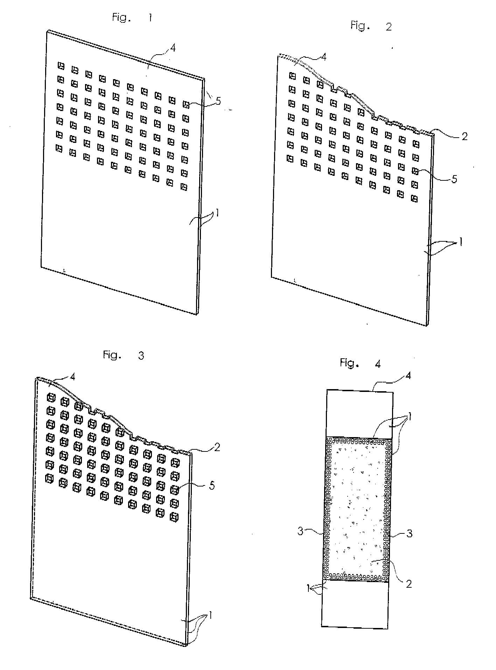

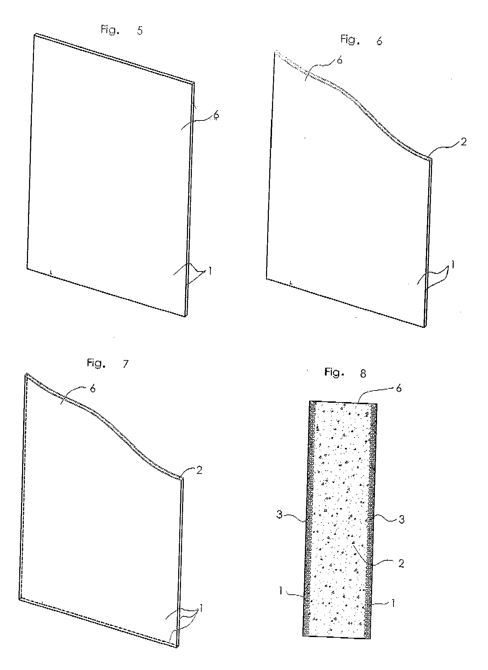

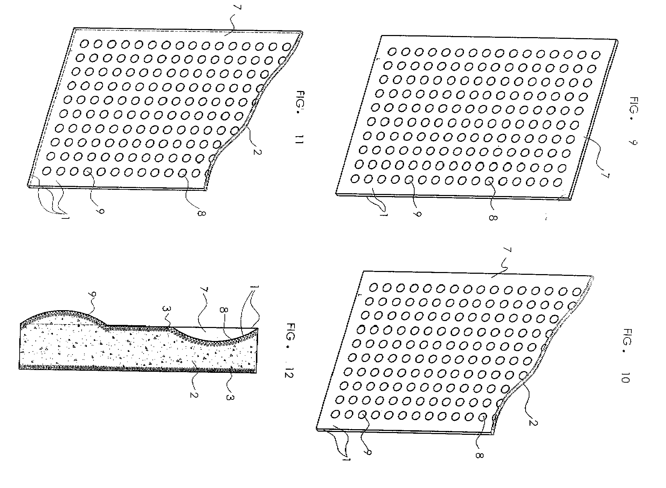

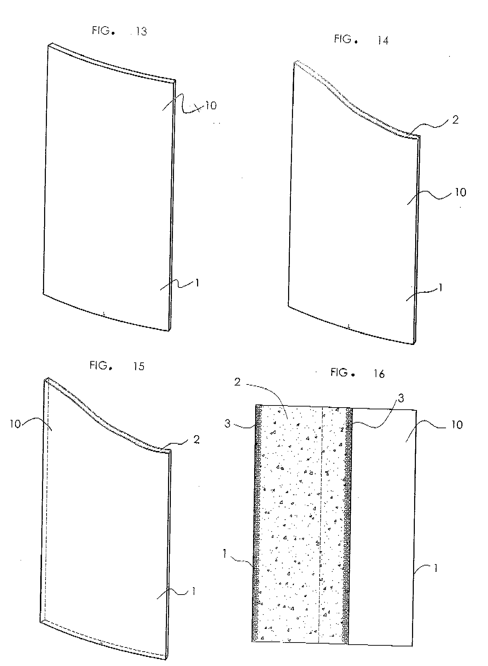

La figure 1.- montre une vue en perspective d'un panneau intégral plat (4) avec des surfaces extérieures lisses et plates (1) et des perforations (5).

La figure 2.- montre le même objet que la figure précédente avec une coupe dans laquelle apparaît la masse structurée intérieure (2).

La figure 3.- Montre le même objet que les figures précédentes dans une vue transparente dans laquelle les surfaces extérieures (1), la masse structurée intérieure (2) et les perforations (5) sont représentées.

La figure 4.- Montre une section longitudinale du panneau dans laquelle sont représentées les surfaces extérieures (1), la masse structurée intérieure (2) et la peau intégrale (3).

Les figures 5, 6, 7 et 8.- Sont des vues en perspective d'un panneau lisse plat (6), avec une vue des surfaces extérieures (1), la masse structurée intérieure (2) et en section longitudinale en montrant la peau intégrale (3) sur diverses surfaces.

Les figures 9, 10 11 et 12.- Sont des vues en perspective d'un panneau gaufré plat (7), avec des bas-reliefs (8) et des hauts-reliefs (9), une vue des surfaces extérieures (1), la masse structurée intérieure (2) et en section longitudinale en montrant les bas-reliefs et les hauts-reliefs (8-9) et la peau intégrale (3) sur diverses surfaces.

Les figures 13, 14, 15 et 16.- Sont des vues en perspective d'un panneau lisse courbé (10) avec une vue des surfaces extérieures (1), la masse structurée intérieure (2) et en section longitudinale en montrant la peau intégrale (3) sur diverses surfaces.

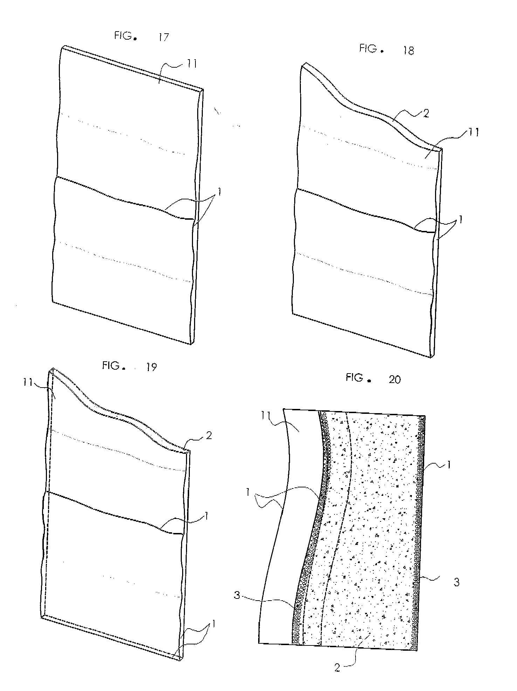

Les figures 17, 18, 19 et 20.- Sont des vues en perspective d'un panneau plat de surface irrégulière (11) avec une vue des surfaces extérieures(1), la masse structurée intérieure (2) et en section longitudinale la peau intégrale (3) sur diverses surfaces.

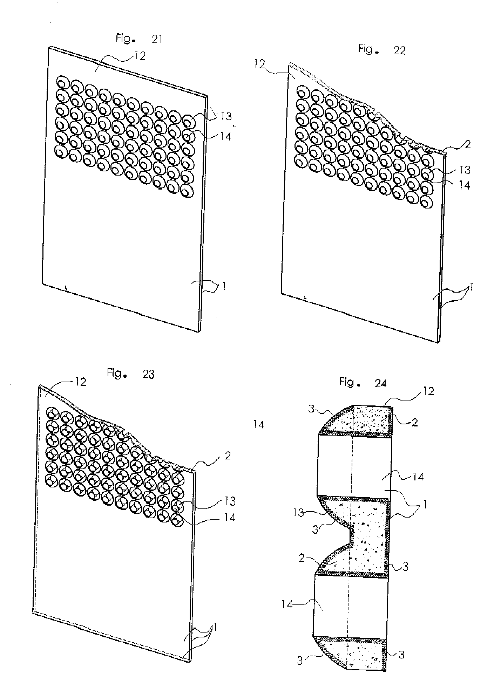

Les figures 21, 22, 23 et 24.- Sont des vues en perspective d'un panneau plat (12) avec des reliefs (13) et des perforations (14); avec une vue des surfaces extérieures (1), la masse structurée intérieure (2) et en section longitudinale en montrant la peau intégrale (3) sur diverses surfaces.

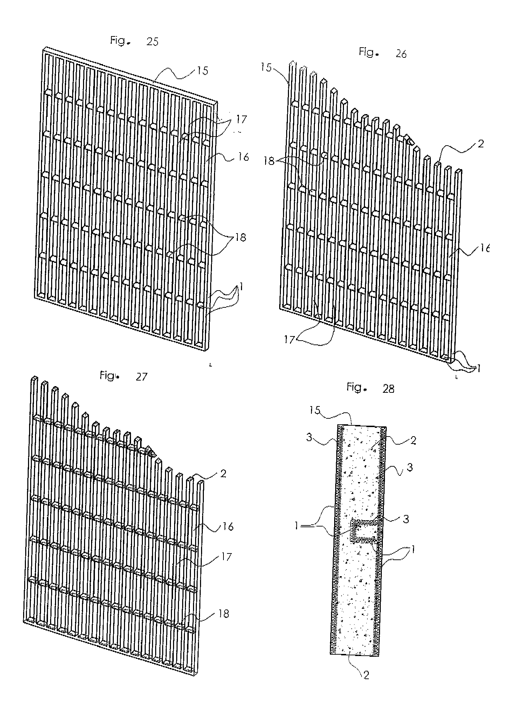

Les figures 25, 26, 27 et 28.- Sont des vues en perspective d'un treillis (15) avec des creux (16), des barres verticales (17) et horizontales (18), avec une vue des surfaces extérieures (1), la masse structurée intérieure (2) et en section longitudinale en montrant la peau intégrale (3) sur diverses surfaces.

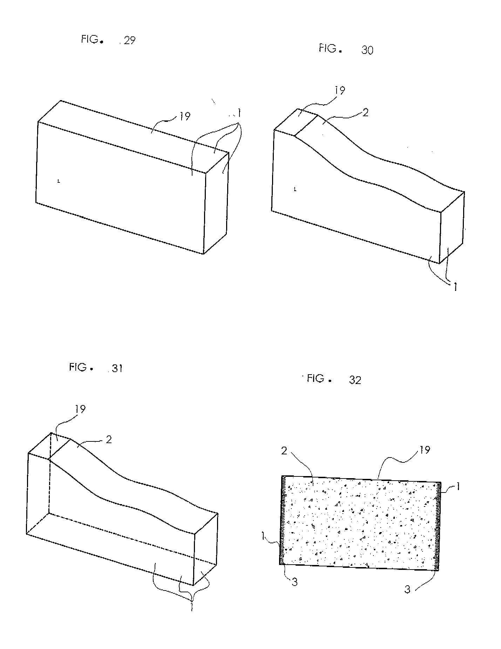

Les figures 29, 30, 31 et 32.- Sont des vues en perspective d'un bloc parallélépipède massif (19); avec une vue des surfaces extérieures (1), la masse structurée intérieure (2) et en section longitudinale en montrant la peau intégrale (3) sur diverses surfaces.

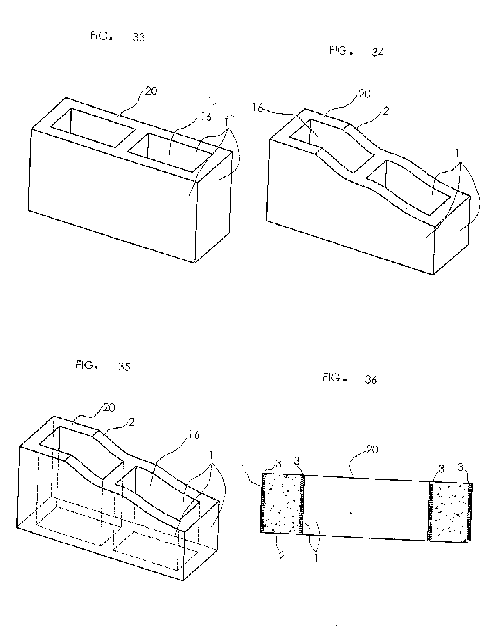

Les figures 33, 34, 35 et 36.- Sont des vues en perspective d'un bloc parallélépipède (20) avec des creux (16), avec une vue des surfaces extérieures (1), la masse structurée intérieure (2) et en section longitudinale en montrant la peau intégrale (3) sur diverses surfaces.

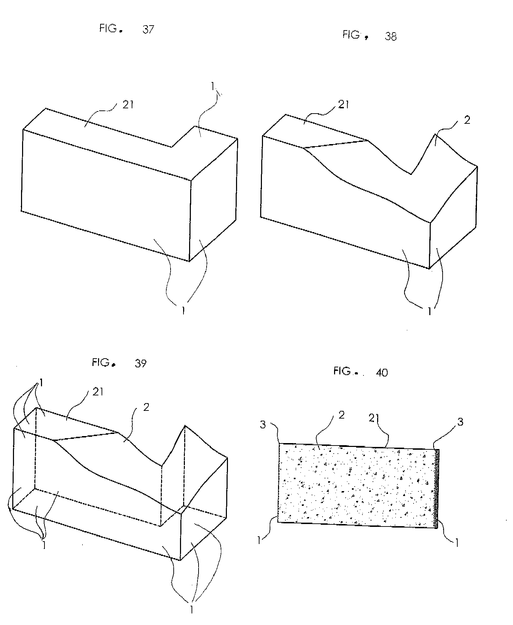

Les figures 37, 38, 39 et 40.- Sont des vues en perspective d'un bloc massif (21) sous forme d'angle droit, avec une vue des surfaces extérieures (1), la masse structurée intérieure (2) et en section longitudinale en montrant la peau intégrale (3) sur diverses surfaces.

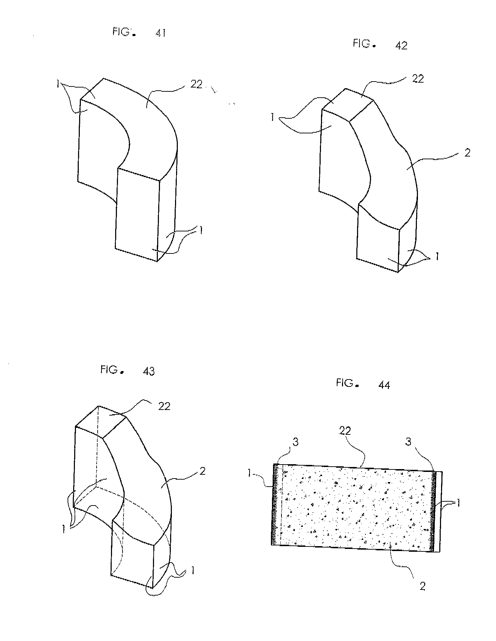

Les figures 41, 42, 43 et 44.- Sont des vues en perspective d'un bloc massif courbé (22), avec une vue des surfaces extérieures (1), la masse structurée intérieure (2) et en section longitudinale en montrant la peau intégrale (3) sur diverses surfaces.

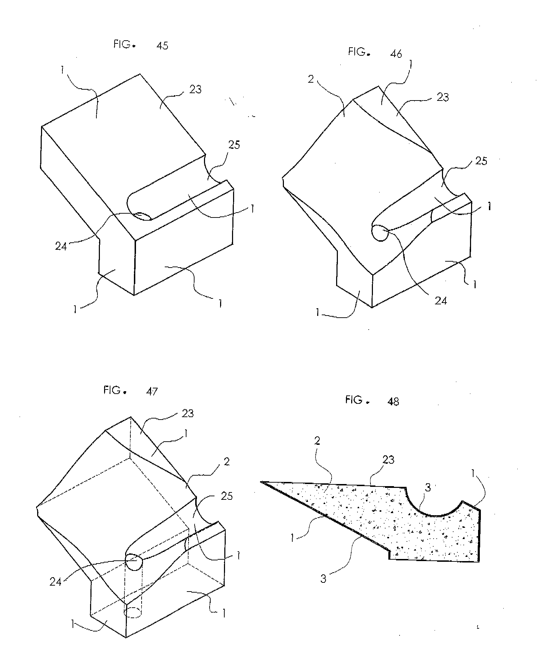

Les figures 45, 46, 47 et 48.- Sont des vues en perspective d'un bloc massif irrégulier (23) avec des perforations (24) et un canal (25), avec une vue des surfaces extérieures (1), la masse structurée intérieure (2) et en section longitudinale en montrant la peau intégrale (3) sur diverses surfaces.

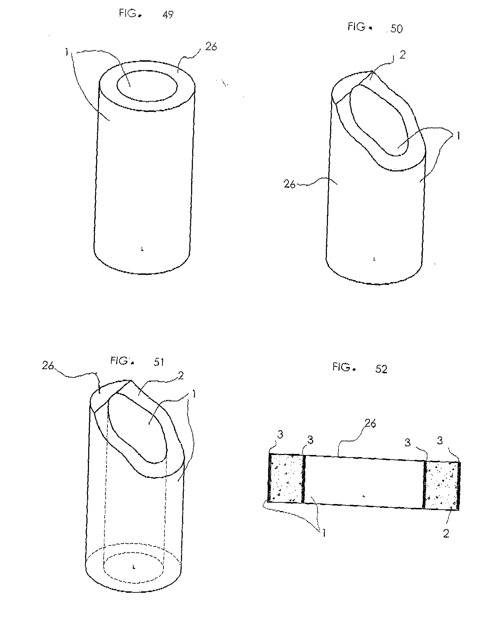

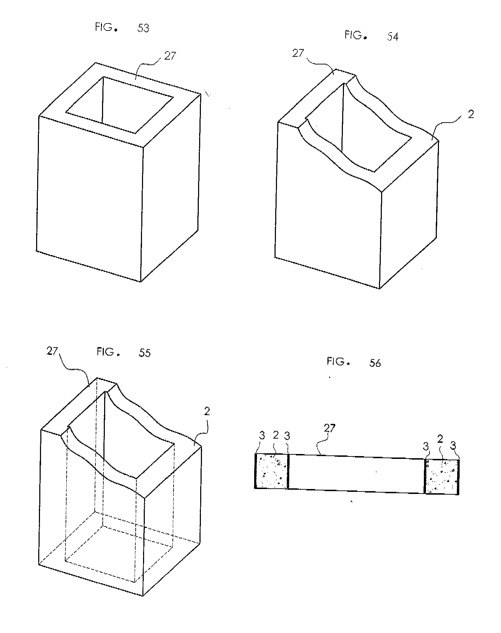

Les figures 49, 50, 51 et 52.- Sont des vues en perspective d'un tube droit de section circulaire (26), avec une vue des surfaces extérieures (1), la masse structurée intérieure (2) et en section longitudinale en montrant la peau intégrale (3) sur diverses surfaces.

Les figures 53, 54, 55 et 56.- Sont des vues en perspective d'un tube carré (27), avec une vue des surfaces extérieures (1), la masse structurée (2) et en section longitudinale en montrant la peau intégrale (3) sur diverses surfaces.

La figure 57.- Est une vue en perspective d'un panneau (28) avivé avec des moulures de recouvrement (29) et des tenons de fixation (30).

La figure 58.- Est une vue en perspective d'un treillis (31) avec des perforations latérales (32).

La figure 59.- Est une vue en perspective d'un bloc (33) avivé avec des cannelures d'encastrements mâles (34) et femelles (35).

La figure 60.- Est une vue en perspective d'un tube (36) coiffé à ses extrémités de cannelures d'union mâle (37) et femelle (38).

### Description d'une forme préférée de réalisation

D'après les figures commentées, on peut observer un panneau plat (4) perforé (5) composé de la masse structurée intérieure (2) de polyuréthane et de fibre qui constitue le volume de la pièce fusionnée avec une peau intégrale extérieure (3) de polyuréthane pigmenté de haute dureté dont la géométrie générale est essentiellement celle d'un panneau (4) ayant des perforations (5) adoptant la forme conventionnelle d'un panneau perforé (4), ou treillis (7), et à ces effets le moule de moulage, logiquement, comprendra les reliefs nécessaires pour la mise en forme de chaque modèle et des inserts nécessaires pour la fixation sur des éléments externes de support (30 et 32).

Un panneau selon les différentes représentations qui peut adopter d'autres versions très différentes et qui sans être limitatives peuvent être du type plat et lisse (6); du type (7) avec des bas-reliefs et des hauts-reliefs (8) et (9); du type ondulé ou courbé (10); du type irrégulier (11); du type alvéolaire (12) avec des reliefs (13) et des perforations (14) et du type en treillis (15), avec des creux (16) et une trame verticale (17) et horizontale (18), avec des bords latéraux moulurés (29) et à cet effet le moule de moulage, logiquement, comprendra les reliefs nécessaires pour la mise en forme de chaque modèle et les inserts nécessaires pour la fixation sur des éléments externes de support (30 et 32).

Un bloc selon les différentes représentations qui peut adopter d'autres versions très différentes et qui sans être limitatives peuvent être du type parallélépipède massif (19); du type parallélépipède creux (20), du type (33) avec des cannelures latérales mâle (34) et femelle (35) et à cet effet le moule de moulage, logiquement, comprendra les reliefs nécessaires pour la mise en forme de chaque modèle et les inserts nécessaires pour la fixation à des éléments externes de support (30 et 32).

Un tube selon les différentes représentations qui peut adopter d'autres versions très différentes et qui sans être limitatives peuvent être du type rond et lisse (26), du type parallélépipède (27), du type avec des extrémités à rainures et languettes (36) avec les encastrements caractéristiques mâles (37) et femelles (38), et à cet effet le moule de moulage, logiquement, comprendra les reliefs nécessaires pour la mise en forme de chaque modèle et les inserts nécessaires pour la fixation sur des éléments externes de support.

## Revendications

1. PANNEAUX, TREILLIS, BLOCS ET TUBES INTÉGRAUX DE STRUCTURE INTERNE DÉSORGANISÉE POUR L'ÉDIFICATION ET L'URBANISME ET MODE DE FABRICATION d'un seul corps compact qui est **CARACTÉRISÉ en ce qu'**il est constitué essentiellement d'une masse (2) de polyuréthane structurée intérieurement par des fibres ou des filaments et par la peau extérieure intégrale de polyuréthane pigmenté (3) conformés et intégrés selon leur procédé de fabrication dans un même moule.

2. PANNEAUX, TREILLIS, BLOCS ET TUBES INTÉGRAUX DE STRUCTURE INTERNE DÉSORGANISÉE POUR L'ÉDIFICATION ET L'URBANISME ET MODE DE FABRICATION conformés et intégrés dans un même moule, selon la revendication 1, dont le procédé de fabrication est **CARACTÉRISÉ en ce qu'**il est réalisé industriellement au moyen du remplissage d'un moule revêtu intérieurement de polyuréthane pigmenté (3) de haute densité en introduisant un mélange de polyuréthane (2) composé essentiellement de polyols et diisocyanate de diphénylméthane, et une fois mélangé avec les fibres ou filaments dispersés, où se produit la réaction, la solidification et l'intégration de tous les matériaux on obtient une pièce compacte intégrale (1) de forme déterminée par le moule.

3. PANNEAUX, TREILLIS, BLOCS ET TUBES INTÉGRAUX DE STRUCTURE INTERNE DÉSORGANISÉE POUR L'ÉDIFICATION ET L'URBANISME ET MODE DE FABRICATION dans lesquels la pièce compacte intégrale (1) de forme déterminée par le moule selon la revendication 2, est **CARACTÉRISÉE en ce que** les matériaux de structuration sont dispersés à l'intérieur de la masse (2) de polyuréthane qui constitue la pièce (1) et **en ce que** la couche extérieure de polyuréthane pigmenté (3) est fusionnée avec la masse (2) en formant une peau intégrale (3).

4. PANNEAUX, TREILLIS, BLOCS ET TUBES INTÉGRAUX DE STRUCTURE INTERNE DÉSORGANISÉE POUR L'ÉDIFICATION ET L'URBANISME ET MODE DE FABRICATION dans laquelle la pièce compacte intégrale (1) de forme déterminée par le moule de la revendication 2, est **CARACTÉRISÉE en ce qu'**elle adopte diverses formes telles que des panneaux plats perforés (4); panneaux plats lisses (6); panneaux avec des recouvrements latéraux (28); panneaux (7) avec des bas-reliefs et des hauts-reliefs (8) et (9) respectivement; panneaux courbés lisses (10); panneaux irréguliers (11); panneaux alvéolaires (12) avec des reliefs (13) et des perforations (14), et treillis (15) avec des creux (16), trame verticale (17) et horizontale (18); treillis avec perforations de fixation latérales (31), blocs massifs lisses parallélépipèdes (19); blocs creux (20); blocs sous forme d'angle (21); blocs courbés (22); blocs irréguliers (23); blocs à rainures et languettes (33); tubes ronds lisses (26) et tubes à rainures et languettes (36).

5. PANNEAUX, TREILLIS, BLOCS ET TUBES INTÉGRAUX DE STRUCTURE INTERNE DÉSORGANISÉE POUR L'ÉDIFICATION ET L'URBANISME ET MODE DE FABRICATION dans lequel la structure désorganisé intérieure, selon les revendications 1 et 2 est **CARACTÉRISÉE en ce qu'**elle est formée par des fibres ou des filaments dispersés de forme hétérogène à l'intérieur d'une masse (2) de polyuréthane, les deux matériaux ayant été mélangés lors de la phase liquide du polyuréthane.

6. PANNEAUX, TREILLIS, BLOCS ET TUBES INTÉGRAUX DE STRUCTURE INTERNE DÉSORGANISÉE POUR L'ÉDIFICATION ET L'URBANISME ET MODE DE FABRICATION, dans lesquels la forme extérieure déterminée par un moule, selon les revendications 1 et 2, est **CARACTÉRISÉE en ce qu'**elle admet différentes formes périmétrales pour faciliter l'union, l'encastrement ou le recouvrement des pièces entre elles sous forme de perforations (32) et de cannelures mâles (34, 37) et femelles (35, 38) et de recouvrements (29).

7. PANNEAUX, TREILLIS, BLOCS ET TUBES INTÉGRAUX DE STRUCTURE INTERNE DÉSORGANISÉE POUR L'ÉDIFICATION ET L'URBANISME ET MODE DE FABRICATION dans lesquels la masse structurée de polyuréthane, selon les revendications 1, 2 et 3, est **CARACTÉRISÉE en ce qu'**elle admet différents inserts métalliques (30) pour faciliter la fixation sur une structure auxiliaire externe.

## Revendications modifiées

### Revendications modifiées conformément à la règle 86(2) CBE.

**1.** PIÈCES INTÉGRALES DE STRUCTURE INTERNE DÉSORGANISÉE ET UNE MODE DE FABRICATION d'un seul corps compact d'une masse (2) de polyuréthane qui est **CARACTÉRISÉ en ce qu'**il est constitué essentiellement structurée intérieurement par des fibres ou des filaments de matériaux plastiques ou synthétiques en distribution désorganisée et par la peau extérieure intégrale de polyuréthane pigmenté (3) conformés et intégrés dans un même moule.

**2.** UNE MODE DE FABRICATION des pièces intégraux de structure interne désorganisée conformés et intégrés dans un même moule, selon la revendication 1, dont le pièce est **CARACTÉRISÉ en ce qu'**il est réalisé au moyen d'un seul et même moule revêtu intérieurement de polyuréthane pigmenté (3) de haute densité en introduisant un mélange de polyuréthane (2) composé essentiellement de polyols et diisocyanate de diphénylméthane, et une fois mélangé avec l'incorporation des fibres ou filaments dispersés, où se produit la réaction, la solidification et l'intégration de tous les matériaux on obtient une pièce compacte intégrale (1) de forme déterminée par le moule.

**3.** PIÈCES INTÉGRALES DE STRUCTURE INTERNE DÉSORGANISÉE dans lesquels la pièce compacte intégrale (1) de forme déterminée par le moule selon la revendication 2, est **CARACTÉRISÉE en ce que** les matériaux de structuration désorganisée sont dispersés à l'intérieur de la masse (2) de polyuréthane qui constitue la pièce (1) et **en ce que** la couche extérieure de polyuréthane pigmenté (3) est fusionnée avec la masse (2) en formant une peau intégrale (3).

**4.** PIÈCES INTÉGRALES DE STRUCTURE INTERNE DÉSORGANISÉE dans laquelle la pièce compacte intégrale (1) de forme déterminée par le moule de la revendication 2, est **CARACTÉRISÉE en ce qu'**elle adopte diverses formes telles que des panneaux plats perforés (4); panneaux plats lisses (6); panneaux avec des recouvrements latéraux; panneaux (7) avec des bas-reliefs et des hauts-reliefs (8) et (9) respectivement; panneaux courbés lisses (10); panneaux irréguliers (11); panneaux alvéolaires (12) avec des reliefs (13) et des perforations (14), et treillis (15) avec des creux (16), trame verticale (17) et horizontale (18); treillis avec perforations de fixation latérales, blocs massifs lisses parallélépipèdes (19); blocs creux (20); blocs sous forme d'angle (21); blocs courbés (22); blocs irréguliers (23); blocs à rainures et languettes; tubes ronds lisses (26) et tubes à rainures et languettes.

**5.** PIÈCES INTÉGRALES DE STRUCTURE INTERNE DÉSORGANISÉE dans lequel la structure désorganisée intérieure, selon les revendications 1 et 3 est **CARACTÉRISÉE en ce qu'**elle des fibres ou des filaments plastiques ou synthétiques de densité plus dure que la masse et sont dispersés de forme hétérogène à l'intérieur d'une masse (2) de polyuréthane, les deux matériaux ayant été mélangés lors de la phase liquide du polyuréthane.

**6.** PIÈCES INTÉGRALES DE STRUCTURE INTERNE DÉSORGANISÉE dans lesquels la forme extérieure déterminée des pièces selon les revendications 1 et 2, est **CARACTÉRISÉE en ce qu'**elle admet différentes formes périmètrales pour faciliter l'union, l'encastrement ou le recouvrement des pièces entre elles sous forme de perforations et de cannelures mâles et femelles et de recouvrements.

**7.** PIÈCES INTÉGRALES DE STRUCTURE INTERNE DÉSORGANISÉE dans lesquels la masse structurée de polyuréthane, selon les revendications 1, 2 et 3, est **CARACTÉRISÉE en ce qu'**elle admet différents inserts métalliques pour faciliter la fixation sur une structure auxiliaire externe.
